# EUROPÄISCHE PATENTSCHRIFT

(11) **EP 3 446 829 B1**
(45) Veröffentlichungstag und Bekanntmachung des Hinweises auf die Patenterteilung: **20.04.2022**
(21) Anmeldenummer: 18188866.0
(22) Anmeldetag: 14.08.2018
(51) Int. Cl.: B23Q 16/10

(54) **BEARBEITUNGSKOPF MIT ACHSKLEMMEINRICHTUNG UND BEARBEITUNGSVORRICHTUNG**
MACHINING HEAD WITH AXLE CLAMP DEVICE AND PROCESSING DEVICE
TÊTE D'USINAGE À DISPOSITIF DE SERRAGE D'AXE ET DISPOSITIF D'USINAGE

(30) Priorität: 18.08.2017 DE 102017118901
(43) Veröffentlichungstag der Anmeldung: 27.02.2019
(73) Patentinhaber: HOMAG GmbH, 72296 Schopfloch (DE)
(72) Erfinder: Calmbach, Martin, 72160 Horb-Dießen (DE); Gringel, Martin, 72479 Straßberg (DE)
(74) Vertreter: Hoffmann Eitle

(56) Entgegenhaltungen:
- DE-A1- 2 944 983
- US-A- 4 638 550
- US-B1- 6 450 074

## Beschreibung

### Technisches Gebiet

Die vorliegende Erfindung betrifft einen Bearbeitungskopf mit Achsklemmeinrichtung sowie eine einen erfindungsgemäßen Bearbeitungskopf aufweisende Bearbeitungsvorrichtung. Derartige Bearbeitungsvorrichtungen werden beispielsweise im Bereich der Möbel- und Bauelementeindustrie eingesetzt, um Möbelteile, Paneele, Türen, Fenster oder ähnliches zu bearbeiten.

### Stand der Technik

In der modernen Bearbeitung, insbesondere sekundär Bearbeitung, von Holz- und/oder Holzersatzwerkstoffen ist es allgemein bekannt, in Bearbeitungsvorrichtungen bzw. Bearbeitungszentren eine Vielzahl von unterschiedlichen Bearbeitungen an einem Werkstück vorzunehmen, um dieses zu Formen bzw. mit notwendigen Elementen wie z.B. Bohrungen, Nuten, Ausschnitten und dergleichen zu versehen. Um die notwendigen Bearbeitungen an dem zu bearbeitenden Werkstück in verschiedensten Raumrichtungen durchführen zu können, weisen moderne Bearbeitungsvorrichtungen bzw. Bearbeitungszentren für gewöhnlich eine Vielzahl von Achsen auf, die eine Positionierung des Werkzeugs an der gewünschten Koordinate mit der gewünschten Ausrichtung (Raumausrichtung) ermöglichen, um die erforderlichen Bearbeitungen wie z.B. Fräs-, Bohr-, und Schneidbearbeitungen am Werkstück durchführen zu können.

In den oben erwähnten Bearbeitungsvorrichtungen bzw. Bearbeitungszentren wird das zu bearbeitende Werkstück normalerweise auf einem Aufspanntisch der Vorrichtung positioniert und an diesem mit bekannten Systemen befestigt, sodass die erforderlichen Bearbeitungen vorgenommen werden können. Hierbei spricht man von stationären Bearbeitungsvorrichtungen. Andererseits werden für gewöhnlich bei hohen Stückzahlen sowie mehreren hintereinander geschalteten Bearbeitungsschritten getaktete oder ungetaktete Durchlaufbearbeitungsvorrichtungen eingesetzt.

Um die Steifigkeit der Bearbeitungsvorrichtung bzw. des Bearbeitungszentrums zu erhöhen und damit die Präzision der Bearbeitung zu verbessern, hat es sich ferner etabliert, soweit wie möglich die jeweiligen Achsen in den Bearbeitungskopf direkt zu integrieren. Damit ist es möglich, die Abstände zwischen Werkzeug und Führungs- bzw. Aufnahmeelemente zu reduzieren und somit die Steifigkeit zu steigern.

Somit steht der Wunsch einer möglichst kompakten Bauweise des Bearbeitungskopfs bei gleichzeitig optimaler Zugänglichkeit des Werkzeugs zu dem Werkstück (dem Werkzeug alle notwendigen Freiheitsgrade zu verleihen) in Konflikt mit einer möglichst hohen Steifigkeit des Bearbeitungskopfs bzw. der Bearbeitungsvorrichtung.

Um diesen Konflikt zu lösen schlägt der Stand der Technik vor, während der jeweiligen Bearbeitungsaufgabe die einzelnen Achsen zu verriegeln. Darunter ist zu verstehen, dass jedes rotierbare Element bzw. bewegliche Element des Bearbeitungskopfs bzw. der Bearbeitungsvorrichtung, das mit der Zustellbewegung des Werkstücks in Verbindung steht, in Bezug auf ein im Kraftfluss vorhergehendes Element verriegelbar ist, um auf diese Weise einen Aufbau zu erzielen, der so starr wie möglich ist.

Hierzu lehrt beispielsweise die DE 10 2006 020 682 A1, einen Arbeitskopf mit einer Verriegelungseinrichtung zu versehen, die ein an einem ersten Teil befestigtes Verriegelungsmittel aufweist, um auf ein zweites Teil, das relativ zum ersten Teil beweglich ist, einzuwirken, um das zweite Teil zu verriegeln, wobei das zweite Teil relativ zum ersten Teil um eine Achse C rotierbar ist und wobei das Verriegelungsmittel dafür ausgebildet ist, Rotationen um die Achse C und um Achsen, die zur Achse C senkrecht stehen, zu verhindern. Ferner ist das Verriegelungsmittel dafür ausgebildet, das zweite Teil im Wesentlichen in einer ausgeglichenen Art bei Abwesenheit von externen Lasten zu belasten.

Wie der Fig. 1 entnommen werden kann, die eine der Lehre der DE 10 2006 020 682 A1 folgende Ausführungsform einer Verriegelungseinrichtung 100 eines Arbeitskopfs zeigt, ist die vorgeschlagene Verriegelungseinrichtung 100 äußerst komplex aufgebaut. So stellt ein erste Teil 101 der Verriegelungsvorrichtung 100 ein gedacht räumlich fixiertes Teil dar, welches jedoch selbst an einer Achse befestigt sein kann, um eine translatorische oder rotatorische Bewegung zu ermöglichen. Ein zweites Teil 102 ist mittels einer Nabe 103, die in dem ersten Teil 101 gelagert ist, um eine Achse C rotierbar an dem Teil 101 befestigt. Damit ist ein an dem zweiten Teil 102 befestigtes Werkzeugaggregat (nicht dargestellt) um die Achse C drehbar aufnehmbar. Um nach Positionierung eines Werkzeugs, das in dem Werkzeugaggregat aufgenommen ist, die Achse C zu versteifen, weist die Verriegelungseinrichtung 100 Verriegelungsmittel auf. Die Verriegelungsmittel bestehen aus einem Betätigungsmittel 104, einer Sattelkopplung 105 und zwischen diesen aufgenommene keilförmige Mittel 106. Mittels einer Leitung 107 wird ein unter Druck stehendes Fluid, insbesondere Luft, in eine ringförmige Kammer in der die Verriegelungsmittel angeordnet sind eingeführt, wodurch eine Belastung, die im Wesentlichen parallel zur Rotationsachse C ist, auf das Betätigungsmittel 104 ausgeübt wird. Hierdurch werden die keilförmigen Mittel 106 zwischen dem Betätigungsmittel 104 und der Sattelkopplung 105 geklemmt, wodurch ein Kraftschluss zwischen dem äußeren keilförmigen Mittel 106a und einem flächenhaften Seitenelement 19, das mit dem zweiten Teil 102 verbunden ist, hergestellt. Damit wird das zweite Teil 102 kraftschlüssig mit dem ersten Teil 101 verbunden, womit eine Rotation des zweiten Teils 102 um die Achse C unterbunden wird und somit das zweite Teil 102 verriegelt ist.

Des Weiteren besteht bei bekannten Arbeitsköpfen das Problem, dass, um einen automatischen Werkzeugwechsel des in dem Bearbeitungsaggregat aufgenommenen Werkzeugs durchführen zu können, direkt in dem Bearbeitungsaggregat (bzw. Werkzeugaggregat), insbesondere in der Spindelaufnahme, eine Löseeinheit vorgesehen werden muss, was zu einem komplexen Aufbau des Bearbeitungsaggregates und damit verbunden zu einer hohen Masse des Bearbeitungsaggregates führt.

Hierzu wird zum Beispiel wie die DE 603 03 285 T2 lehrt, ein Bearbeitungsaggregat (motorgetriebene Einheit) 201, welches das Werkzeug 202 trägt und antreibt, mit einem pneumatischen Zylinder 203 versehen, der über einen Hebelmechanismus 204 das aufgenommene Werkzeug 202 spannen oder freigeben kann. Ein der Lehre der DE 603 03 285 T2 folgendes Bearbeitungsaggregat ist in Fig. 2 beispielhaft dargestellt.

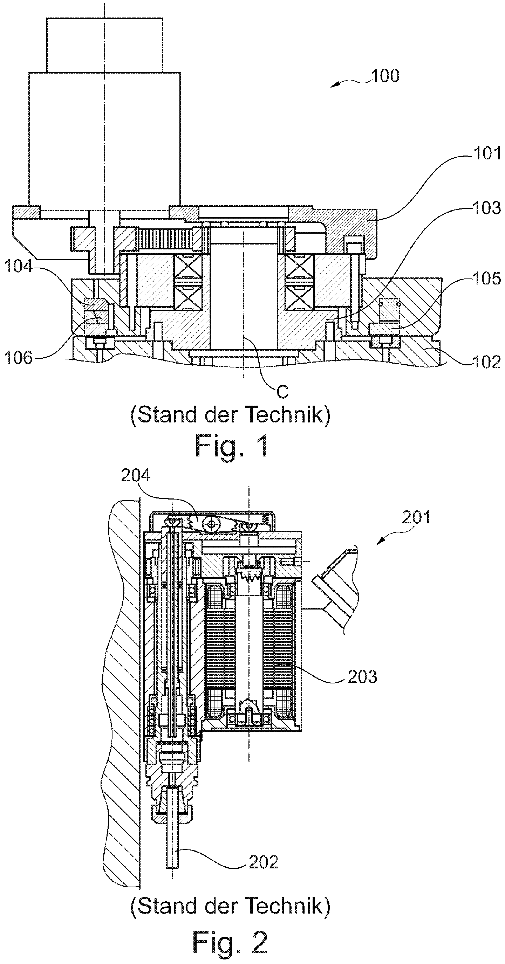

Wie dem Fig. 2 entnommen werden kann, handelt es sich bei dem pneumatischen Zylinder 203 und dem antreibenden Hebelmechanismus 204 um eine Sonderanfertigung, die zu hohen Herstellungskosten führt.

Der nächstliegende Stand der Technik ist in der US 6 450 074 B1 beschrieben, die auf eine Baugruppe zum Befestigen und Platzieren eines zusätzlichen Kopfes einer numerischen Werkzeugmaschine gerichtet ist, wobei die Baugruppe umfasst: eine obere Zylinderhalterung, die in der Peripherie einer Hauptwelle der numerischen Werkzeugmaschine angeordnet ist und mit einem Druckabschnitt und einer pneumatischen Wanne/Mulde versehen ist; eine untere Zylinderbefestigung, die in der Peripherie der Hauptwelle der numerischen Werkzeugmaschine angeordnet ist und mit einer hydraulischen Wanne/Mulde und einem Druckabschnitt versehen ist, der dem Druckabschnitt der oberen Zylinderbefestigung gegenüberliegt; einen Kolben, der zwischen der oberen Zylinderhalterung und der unteren Zylinderhalterung angeordnet ist und in einem unteren Abschnitt davon einen Halteschlitz aufweist; einen Eingriffsblock mit zwei Hakenabschnitten, wobei einer der zwei Hakenabschnitte in dem Halteschlitz des Kolbens gehalten wird, und wobei der andere der zwei Hakenabschnitte mit einem Halteabschnitt versehen ist. Die US 6 450 074 B1 offenbart die Merkmale des Oberbegriffs vom Anspruch 1.

### Gegenstand der Erfindung

Ziel der vorliegenden Erfindung ist es, einen Bearbeitungskopf sowie eine einen erfindungsgemäßen Bearbeitungskopf aufweisende Bearbeitungsvorrichtung bereitzustellen, anhand deren es möglich ist, auf einfache und kostengünstige Weise die Steifigkeit des Bearbeitungskopfs, insbesondere die Steifigkeit mindestens einer Achse oder Bewegungsachse, zu erhöhen und damit die Lagerung und den Antrieb der Achse oder Bewegungsachse zu entlasten.

Die Aufgabe wird gelöst durch einen Bearbeitungskopf nach Anspruch 1 sowie eine einen erfindungsgemäßen Bearbeitungskopf aufweisende Bearbeitungsvorrichtung nach Anspruch 15. Bevorzugte Weiterbildungen der Erfindung sind in den abhängigen Ansprüchen gegeben.

Einer der Kerngedanken der vorliegenden Erfindung ist es, einen Bearbeitungskopf bereitzustellen, mittels dem ein Bearbeitungsaggregat, dass an dem Bearbeitungskopf beweglich anbringbar bzw. angebracht ist, relativ zu dem Bearbeitungskopf fixierbar und abstützbar ist, wobei die Fixierung und Abstützung in zumindest einer definierten Stellung des Bearbeitungsaggregates erfolgen kann.

Gemäß einer Ausführungsform der vorliegenden Erfindung weist ein Bearbeitungskopf für eine Bearbeitungsvorrichtung, insbesondere zum spanenden Bearbeiten von Werkstücken, bevorzugt plattenförmigen Werkstücken, wobei die Werkstücke bevorzugt zumindest teilweise aus Holz, Holzwerkstoffen, Holzersatzwerkstoffen, Kunststoff oder einer Kombination hiervon bestehen, auf: einen Grundkörper, mindestens ein Bearbeitungsaggregat, zur Aufnahme eines Werkzeugs, eine Lagerungseinrichtung, mittels der das Bearbeitungsaggregat beweglich an dem Grundkörper angebracht ist, und eine Klemmeinrichtung, mittels der das Bearbeitungsaggregat relativ zu dem Grundkörper fixierbar und abstützbar ist, wobei die Klemmeinrichtung ein erstes Klemmelement, das grundkörperseitig vorgesehen ist, und ein zweites Klemmelement, das bearbeitungsaggregatseitig vorgesehen ist, aufweist, und die beiden Klemmelemente so eingerichtet sind, dass sie in zumindest einer definierten Stellung des Bearbeitungsaggregates in einen Klemmzustand bringbar sind. Hierbei kann es ferner vorteilhaft sein, dass die Klemmeinrichtung lediglich in einer definierten Stellung, insbesondere einer Grundstellung, in einen Klemmzustand bringbar ist.

Auf diese Weise ist es möglich, in zumindest einer definierten Stellung, ein in dem Bearbeitungskopf mittels einer Lagerungseinrichtung beweglich aufgenommenes Bearbeitungsaggregat in einen Klemmzustand zu bringen. Wird die Klemmeinrichtung in den Klemmzustand gebracht, können Kräfte, die auf das Bearbeitungsaggregat wirken, durch die Klemmeinrichtung aufgenommen werden und somit die Lagerung und der Antrieb der Achse entlastet werden. Mit anderen Worten, kann die Lagerstelle zwischen Bearbeitungsaggregat und Bearbeitungskopf versteift werden. Dies ist insbesondere vorteilhaft, wenn es sich bei der entsprechenden Achse um eine Achse handelt, die größtenteils in einer Grundstellung, z.B. in der 0° Grad-Stellung, oder in einem eingeschränkten Winkelbereich von etwa ±20°, bevorzugt in einem Winkelbereich von etwa ±50°, weiter bevorzugt in einem Winkelbereich von ±90° betrieben wird, und nur zu einem geringen Maß außerhalb der Grundstellung oder des eingeschränkten Winkelbereichs betrieben wird. Andererseits kann die vorliegende Klemmeinrichtung vorteilhaft sein, wenn lediglich in der Grundstellung oder dem eingeschränkten Winkelbereich große Kräfte auf das Bearbeitungsaggregat wirken, wie z.B. bei einem Werkzeugwechsel.

Gemäß einer weiteren Ausführungsform der vorliegenden Erfindung weist der Bearbeitungskopf ferner eine Löseeinrichtung auf, die dazu eingerichtet ist, eine Spanneinheit des Bearbeitungsaggregates derart betätigen zu können, dass diese Öffnet/Schließt, um ein in der Spanneinheit aufgenommenes Werkzeug zu spannen oder freizugeben, wobei bevorzugt die Löseeinrichtung die Spanneinheit nur dann betätigen kann, wenn das Bearbeitungsaggregat in der zumindest einen definierten Stellung, insbesondere in der Grundstellung und/oder dem eingeschränkten Winkelbereich ist.

Ferner ist es bevorzugt, wenn die Löseeinrichtung aufweist: eine Betätigungseinrichtung, insbesondere Druckelement, das an dem Grundkörper vorgesehen ist, und ein Löseelement, das mit der Spanneinheit in Verbindung steht, insbesondere kraftübertragend in Verbindung steht, wobei zum Öffnen der Spanneinheit die Betätigungseinrichtung eine Kraft auf das Löseelement auswirkt, welche von dem Löseelement auf die Spanneinheit derart übertragen wird, dass die Spanneinheit einen geöffneten Zustand einnimmt.

Mittels des vorgeschlagenen Bearbeitungskopf ist es auf einfache Weise möglich, die Spanneinheit des Bearbeitungsaggregates extern zu betätigen. D.h., die Löseeinrichtung, die die Spanneinheit des Bearbeitungsaggregates, betätigt, nicht wie üblich direkt in der Spanneinheit oder in dem Bearbeitungsaggregat vorzusehen, sondern separat vorzusehen, insbesondere an dem Grundkörper des Bearbeitungskopfs vorzusehen. Hiermit können die Komplexität und das Gewicht der Spanneinheit bzw. des Bearbeitungsaggregats reduziert werden und somit die Herstellungskosten positiv gesenkt werden. Ferner, da das Gewicht der des Bearbeitungsaggregates direkt oder indirekt reduziert werden kann, können die Belastungen, insbesondere die Trägheitskräfte, die seitens des Bearbeitungsaggregates auf den Bearbeitungskopf ausgeübt werden, reduziert werden.

Des Weiteren ist es vorteilhaft, die Lagerungseinrichtung als Drehlager auszubilden, um eine Drehbewegung des Bearbeitungsaggregates um eine Achse A zu ermöglichen, und/oder die Lagerungseinrichtung als ein Linearlager auszubilden, um eine Linearbewegung des Bearbeitungsaggregates entlang einer Achse zu ermöglichen.

Hiermit wird es ermöglicht, das Bearbeitungsaggregat zumindest um eine Achse oder in einer Achse bewegbar zu lagern. Damit kann das Bearbeitungsaggregat mit der notwendigen Anzahl von Freiheitsgraden versehen werden, die notwendig ist, damit das Bearbeitungsaggregat die für die gewünschte Bearbeitung notwendigen Bewegungen ausführen kann.

Erfindungsgemäß weist die Klemmeinrichtung einen Aufnahmekörper auf, in dem das erste Klemmelement einer Schließrichtung des ersten Klemmelements translatorisch beweglich gelagert ist, wobei der Aufnahmekörper in einer Richtung, die senkrecht zu einer Schließrichtung des ersten Klemmelements ist, schwimmend gelagert ist, insbesondere schwimmend in dem Grundkörper gelagert ist.

Auf diese Weise ist es möglich, während des Klemmvorgangs der Klemmeinrichtung mögliche Lagertoleranzen zwischen der Bearbeitungsvorrichtung und dem Grundkörper, insbesondere zwischen den Kontaktflächen des ersten Klemmelements und des zweiten Klemmelements, auszugleichen.

Hierbei ist es vorteilhaft, wenn die Kontaktflächen jeweils in einem bestimmten, insbesondere gleichen, Winkel, zu der Schließrichtung des ersten Klemmelements ausgebildet sind, wobei die Kontaktflächen parallel zueinander ausgerichtet sind, um während des Verschließens miteinander in Eingriff gebracht werden zu können. Im Zusammenspiel mit der schwingenden Lagerung des Aufnahmekörpers der Klemmeinrichtung ist es daher möglich, dass während des Schließvorgangs der Klemmeinrichtung aufgrund von vorgesehenen Schrägen, die Klemmeinrichtung in Richtung Bearbeitungsaggregat gezogen wird. Auf diese Weise wird verhindert, dass aufgrund von möglichen Lagetoleranzen Kräfte auf die Lagerungseinrichtung und somit auf die A-Achse ausgeübt werden.

Gemäß einer weiteren Ausführungsform der vorliegenden Erfindung ist es vorteilhaft, wenn die Betätigungseinrichtung der Löseeinrichtung in dem Aufnahmekörper der Klemmeinrichtung integriert ist.

Dies bietet den Vorteil, dass ebenfalls die Löseeinrichtung in der zur Schließrichtung der Klemmeinrichtung senkrechten Richtung, also der Betätigungsrichtung der Löseeinrichtung, schwimmend in dem Grundkörper gelagert ist. In diesem Fall stützt sich die Löseeinrichtung bei der Betätigung der Spanneinrichtung an der Klemmeinrichtung ab, ohne eine Kraft auf die Lagerungseinrichtung und somit auf die A-Achse auszuüben.

Ebenfalls ist es vorteilhaft, wenn die Klemmeinrichtung und die Löseeinrichtung eine gemeinsame Betätigungseinrichtung oder jeweils eine separate Betätigungseinrichtung vorgesehen ist/sind.

Falls beide Einrichtungen mit einer unabhängigen Betätigungseinrichtung eingerichtet sind, ist es möglich, lediglich die Klemmeinrichtung zu betätigen, wenn das Bearbeitungsaggregat beispielsweise in eine Hauptbearbeitungsrichtung (Grundstellung) gebracht wurde, um auf diese Weise die A-Achse und somit das Bearbeitungsaggregat zu fixieren und abzustützen und nur die Löseeinrichtung zu betätigen, wenn beispielsweise ein Werkzeugwechsel erfolgen soll oder ein Werkzeug eingesetzt werden soll.

Ferner kann der Bearbeitungskopf eine Befestigungseinrichtung aufweisen, zum lösbaren Anbringen des mindestens einen Bearbeitungsaggregates an dem Bearbeitungskopf, insbesondere an dem Grundkörper des Bearbeitungskopfs.

Anhand der Befestigungseinrichtung ist es möglich, das Bearbeitungsaggregat schnell und einfach zu wechseln. Dies kann insbesondere vorteilhaft sein, wenn an einer Bearbeitungsvorrichtung eine Vielzahl von Bearbeitungsaggregaten verwendet werden oder die einzelnen Bearbeitungsaggregate regelmäßig zu Wartungszwecken gewechselt werden müssen.

Weiterhin ist es vorteilhaft, wenn die Klemmeinrichtung dazu eingerichtet ist, das Bearbeitungsaggregat in zumindest einer Richtung, insbesondere in zwei Richtungen die senkrecht zueinander sind, zu fixieren und zu stützen und/oder die Löseeinrichtung, insbesondere durch Zusammenwirken mit der Klemmeinrichtung, dazu eingerichtet ist, das Bearbeitungsaggregat in einer Richtung senkrecht zu den beiden anderen Richtungen zu fixieren und zu stützen.

Gemäß einer weiteren Ausführungsform der vorliegenden Erfindung weist der Bearbeitungskopf ferner eine Abstützeinrichtung auf, mittel der das Bearbeitungsaggregat und/oder die Befestigungseinrichtung an dem Grundkörper abstützbar ist, insbesondere mittelbar oder unmittelbar abstützbar ist, wobei bevorzugt die Abstützeinrichtung nur dann das Bearbeitungsaggregat und/oder die Befestigungseinrichtung abstützt, wenn das Bearbeitungsaggregat in der zumindest einen definierten Stellung, insbesondere in der Grundstellung und/oder dem eingeschränkten Winkelbereich ist.

Anhand der Abstützeinrichtung ist es möglich, die Lagerung des Bearbeitungsaggregates im Bearbeitungskopf weiter zu versteifen. Wie eingangs bereits ausgeführt, ist es wünschenswert, die Befestigung des Bearbeitungsaggregates am Bearbeitungskopf so steif wie möglich auszuführen, um die Präzision der Bearbeitung durch das Bearbeitungsaggregat, insbesondere des in dem Bearbeitungsaggregat aufgenommenen Werkzeugs, zu maximieren. Durch die Notwendigkeit der Lagerung des Bearbeitungsaggregates, um die notwendigen Freiheitsgrade zur Verfügung zu stellen, wird jedoch mit jeder Lagerung (Lagerungseinrichtung) die Steifigkeit der Verbindung zwischen Bearbeitungsaggregat und Bearbeitungskopf reduziert. Anhand der beschriebenen Abstützeinrichtung ist es jedoch möglich, das Bearbeitungsaggregat zusätzlich zu der Klemmeinrichtung, die ebenfalls auf das Bearbeitungsaggregat wirkende Kräfte aufnehmen kann, zusätzlich abzustützen und somit zu versteifen. Auf diese Weise ist es möglich, die Lagerung und den Antrieb der entsprechenden Achse weiter zu entlasten.

Ferner ist es vorteilhaft, wenn die Lagerungseinrichtung mindestens einen translatorischen oder rotatorischen Freiheitsgrad aufweist, und die Abstützeinrichtung so eingerichtet ist, dass sie zumindest in der translatorischen oder rotatorischen Richtung des mindestens einen Freiheitsgrades das Bearbeitungsaggregat und/oder die Befestigungseinrichtung am Grundkörper, mittels der das Bearbeitungsaggregat an dem Bearbeitungskopf befestigt ist, abstützen kann.

Weiterhin ist es bevorzugt, dass die Klemmeinrichtung und/oder die Löseeinrichtung elektrisch, pneumatisch, hydraulisch oder magnetisch angetrieben wird bzw. werden, insbesondere grundkörperseitig angetrieben wird bzw. werden.

Ferner kann das zweite Klemmelement der Klemmeinrichtung in Form eines Zentrierrings, der bevorzugt einen T-förmigen Querschnitt aufweist, oder eines Zentrieransatzes ausgebildet sein, der bevorzugt an dem Bearbeitungsaggregat in der Nähe des Grundkörpers ausgebildet ist. Des Weiteren ist es auch möglich, das erste Klemmelement als zwei Zentrierbacken auszubilden, die insbesondere in etwa komplementär zu dem Zentrierring oder dem Zentrieransatz sind, und so eingerichtet sind, dass sie den Zentrierring oder den Zentrieransatz in der zumindest einen definierten Stellung des Bearbeitungsaggregates klemmen und/oder umgreifen können.

Ebenfalls ist es vorteilhaft, wenn die beiden Zentrierbacken kreisbogenförmig ausgebildet sind, so dass sie den in etwa komplementären Zentrierring oder Zentrieransatz zumindest teilweise umfassen, insbesondere in einem Winkelbereich von mehr als ±20°, weiter bevorzugt in einem Winkelbereich von mehr als ±50°, noch weiter bevorzugt in einem Winkelbereich von mehr als ±90° umfassen, oder die Zentrierbacken mit glatten Stirnflächen ausgebildet sind, die senkrecht zur Schließrichtung der Klemmeinrichtung ausgerichtet sind.

Falls die Zentrierbacken derart ausgeführt sind, dass sie den Zentrieransatz teilweise umfassen, kann eine Zentrierung der Bearbeitungsvorrichtung und somit der A-Achse in zwei Richtungen (X, Y) erfolgen, insbesondere in zwei Richtungen, die senkrecht zueinander und senkrecht zur Betätigungsrichtung der Betätigungseinrichtung der Löseeinrichtung sind.

Alternativ, wenn die Zentrierbacken derart ausgebildet sind, dass sie den Zentrieransatz nicht umfassen, d.h., wenn die Zentrierbacken lediglich glatte Stirnflächen haben, die eben an dem Zentrieransatz, welcher ebenfalls mit ebenen Kontaktflächen ausgebildet ist, anliegen, kann lediglich eine Zentrierung in einer der beiden Richtungen (X, Y) erfolgen, insbesondere in der Schließrichtung der Klemmeinrichtung, andererseits besteht dadurch die Möglichkeit, dass falls die Zentrierbacken sowie der Zentrieransatz entsprechend groß ausgebildet sind oder zum Beispiel die Zentrierbacken kreisförmig ausgebildet sind, wobei sich der Kreisbogen senkrecht zur Schließrichtung erstreckt, die Klemmeinrichtung das Bearbeitungsaggregat nicht nur in der Grundstellung sondern auch in geringen Winkelbereichen um die Grundstellung herum, beispielsweise ± 10° bis 15°, fixieren und abstützen kann.

Des Weiteren ist es bevorzugt, die Betätigungseinrichtung in Form eines Druckstempels auszubilden, der durch einen Kolben (Betätigungseinrichtung) in Richtung Bearbeitungsaggregat beaufschlagbar ist, und dadurch auf das Löseelement, bevorzugt gegen eine Gegenkraft, bevorzugt eine Federkraft, eine Betätigungskraft aufbringen kann, wodurch die Spanneinheit in einen geöffneten Zustand bringbar ist. Hierbei kann die Feder an dem Löseelement und/oder in der Spanneinheit vorgesehen sein.

Ferner ist es bevorzugt, wenn die zumindest eine definierte Stellung des Bearbeitungsaggregates einer Werkzeugwechselstellung entspricht.

Dadurch ist es möglich, die während des Werkzeugwechsels auf das Bearbeitungsaggregat und somit auf die Lagerung bzw. die Lagerungseinrichtung wirkenden Kräfte und Momente durch die Klemmeinrichtung und gegebenenfalls durch die Abstützeinrichtung aufzunehmen. Hierdurch kann auf einfache und kostengünstige Weise die Steifigkeit des Bearbeitungskopfs, insbesondere die Steifigkeit mindestens einer Achse oder Bewegungsachse, erhöht und damit die Lagerung und der Antrieb der Achse oder der Bewegungsachse entlastet werden.

Des Weiteren betrifft die vorliegende Erfindung eine Bearbeitungsvorrichtung zum spanenden Bearbeiten von Werkstücken, bevorzugt plattenförmigen Werkstücken, wobei die Werkstücke bevorzugt zumindest teilweise aus Holz, Holzwerkstoffen, Holzersatzwerkstoffen, Kunststoff oder einer Kombination hiervon bestehen, aufweisend: einen wie oben beschriebenen Bearbeitungskopf.

### Kurze Beschreibung der Zeichnungen

Fig. 1 zeigt eine Ausführungsform eines Arbeitskopfs mit einer Klemmeinrichtung gemäß einer bekannten Technik,
Fig. 2 zeigt einen bekannten Arbeitskopf, bei dem direkt in dem Bearbeitungsaggregat eine Löseeinheit vorgesehen ist,
Fig. 3 zeigt eine erste Ausführungsform eines Bearbeitungskopfs gemäß der vorliegenden Erfindung, und
Fig. 4 zeigt vergrößert eine Abbildung der Klemmeinrichtung und der Löseeinrichtung des in Fig. 3 gezeigten Arbeitskopfs.

**Detaillierte Beschreibung der bevorzugten** Ausführungsformen Nachfolgend werden anhand der beigefügten Figuren bevorzugte Ausführungsformen der vorliegenden Erfindung im Detail beschrieben.

Auf die Figuren 1 und 2 die jeweils Ausführungsformen eines Arbeitskopfs mit einer Klemmeinrichtung gemäß einer bekannten Technik zeigen, wurde bereits oben bei der Würdigung des Stand der Technik detailliert eingegangen, weshalb an dieser Stelle auf eine erneute Beschreibung verzichtet wird.

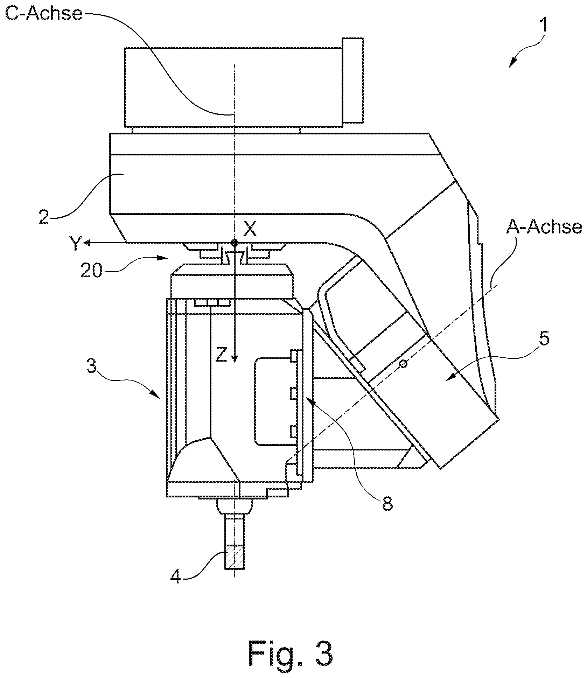

Fig. 3 zeigt eine erste Ausführungsform eines Bearbeitungskopfs 1 gemäß der vorliegenden Erfindung. Wie der

Fig. 3 entnommen werden kann, weist ein Bearbeitungskopf 1 gemäß der dargestellten Ausführungsform einen Grundkörper 2 auf, anhand dessen der Bearbeitungskopf 1 beweglich oder starr an einer Bearbeitungsvorrichtung (nicht dargestellt) befestigbar ist.

In der gezeigten Ausführungsform ist der Bearbeitungskopf 1 beweglich an der Bearbeitungsvorrichtung befestigt, insbesondere um eine C-Achse schwenkbar und/oder drehbar vorgesehen. Auf die C-Achse wird jedoch im Nachfolgenden nicht im Detail eingegangen.

Wie der Fig. 3 weiter entnommen werden kann, ist an dem Grundkörper 2 eine Lagereinrichtung 5 vorgesehen, mittels welcher ein Bearbeitungsaggregat 3 schwenkbar und/oder drehbar an dem Grundkörper 2 befestigt ist, wobei das Bearbeitungsaggregat 3 über eine Befestigungseinrichtung 8 lösbar an dem Bearbeitungskopf 1 bzw. der Lagerungseinrichtung 5 angebracht ist.

In der gezeigten Ausführungsform umfasst das Bearbeitungsaggregat 3 einen Direktantrieb mit einer Spanneinheit (nicht dargestellt), die in dem Direktantrieb integriert ist, wobei mittels der Spanneinheit ein Werkstück 4 spannbar und somit antreibbar in dem Direktantrieb bzw. dem Bearbeitungsaggregat aufgenommen werden kann.

In der dargestellten Ausführungsform ist der Grundkörper 2 annähernd V-Förmig ausgebildet, wobei die beiden Schenkel des Grundkörpers einen Winkel von ca. 135° aufspannen. Ein erster der beiden Schenkel ist in der Fig. 3 horizontal ausgerichtet, womit die C-Achse, an der der erste Schenkel des Grundkörpers 2 befestigt ist, in Fig. 3 vertikal ausgerichtet ist. Eine Drehachse A (A-Achse) der Lagereinrichtung 5, welche an dem zweiten Schenkel der beiden Schenkel befestigt ist, welcher in Fig. 3 nach unten ausgerichtet ist, weist aufgrund des 135° Winkels der beiden Schenkel zueinander einen Winkel von 45° zur Horizontalen in Fig. 3 auf. Die hier genannten Winkel dienen lediglich zur Veranschaulichung und sind entsprechend der jeweiligen Anwendung frei wählbar.

An der Lagereinrichtung 5 ist hängend die Befestigungseinrichtung 8, insbesondere eine Befestigungskonsole, angebracht, welche durch die Lagereinrichtung 5 um die Drehachse A schwenkbar und/oder drehbar ist.

Da die Befestigungseinrichtung 8, insbesondere die Befestigungskonsole, wiederum winkelig, insbesondere im 45° Winkel ausgebildet ist, d.h., zwei Montageflächen der Befestigungseinrichtung 8, mittels welcher die Befestigungseinrichtung einerseits an der Lagereinrichtung 5 befestigt ist und andererseits das Bearbeitungsaggregat 3 befestigbar ist, ist das Bearbeitungsaggregat 3 in seiner Grundstellung vertikal ausgerichtet, d.h. eine Drehachse des in der Spanneinheit aufgenommen Werkstücks 4 ist wie die C-Achse in der Grundstellung vertikal ausgerichtet. Anhand der A-Achse kann das Bearbeitungsaggregat 3 bevorzugt aus einer vertikalen Ausrichtung in eine horizontale Ausrichtung geschwenkt werden.

Wie der Fig. 3 weiter entnommen werden kann, weist der Bearbeitungskopf 1 eine Klemmeinrichtung 20 auf, welche in Fig. vergrößert dargestellt ist.

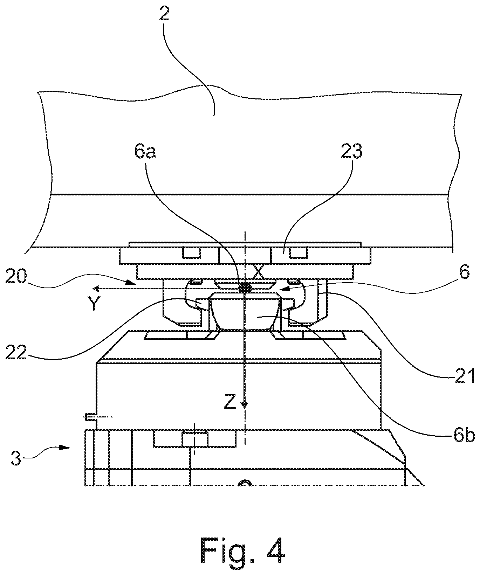

Die Klemmeinrichtung 20 weist wie der Fig. 4 entnommen werden kann, ein erstes Klemmelement 21 auf, welches an dem Grundkörper 2 vorgesehen ist, d.h. bearbeitungsaggregatseitig angebracht ist, sowie ein zweites Klemmelement 22, welches an dem Bearbeitungsaggregat 3 vorgesehen ist, d.h. bearbeitungsaggregatseitig angebracht ist.

In der gezeigten Ausführungsform ist das zweite Klemmelement 22, das an dem Bearbeitungsaggregat 3 vorgesehen ist, als ein Zentrieransatz 22a ausgebildet ist, welcher T-förmig ist. D.h., das erste Klemmelement 21, welches in Form von Zentrierbacken 21a ausgebildet ist, kann in Richtung zu dem Bearbeitungsaggregat 3 das zweite Klemmelement 22 hintergreifen. Wie der Fig. 4 weiter entnommen werden kann, sind die beiden Kontaktflächen zwischen den Zentrierbacken 21a und dem Zentrieransatz 22a parallel zueinander und winkelig zu einer Schließrichtung der Zentrierbacken 21a, welche senkrecht zur C-Achse ist, ausgerichtet. Auf diese Weise ist ein sicheres ineinander gleiten der beiden Kontaktflächen beim Zentriervorgang und Klemmvorgang der Klemmeinrichtung 20 sichergestellt. Mit anderen Worten, die schräg ausgerichteten Kontaktflächen können mögliche Lagetoleranzen in einer Z-Richtung, die senkrecht zur Schließrichtung der Zentrierbacken 21a ist, kompensieren.

Andererseits bedeutet dies, dass bei möglichen Lageabweichungen zwischen dem Bearbeitungsaggregat 3 und der Klemmvorrichtung 20 Zug- oder Druckkräfte auf das Bearbeitungsaggregat 3 und somit auf die Lagerungseinrichtung 5 der A-Achse wirken können. Um dies zu vermeiden, ist die Klemmvorrichtung 20 in der Z-Richtung schwimmend gelagert. Entsprechend fixiert die Klemmvorrichtung 20 das Bearbeitungsaggregat 3 lediglich in X-Richtung und Y-Richtung.

Wie der Fig. 4 weiter entnommen werden kann, weist der Bearbeitungskopf 1 zusätzlich zu der Klemmvorrichtung 20 eine Löseeinrichtung 6 auf, wobei die Löseeinrichtung 6 eine Betätigungseinrichtung 6a, insbesondere ein Druckelement, aufweist, das an dem Grundkörper 2 vorgesehen ist. Genauer gesagt ist das Druckelement der Löseeinrichtung 6 zusammen mit dem ersten Klemmelement 21 in einem Aufnahmekörper 23 aufgenommen, welcher in Z-Richtung schwimmend in dem Grundkörper 2 gelagert ist. Auf diese Weise sind die Klemmeinrichtung 20 und die Betätigungseinrichtung 6a schwimmend gelagert.

Ferner weist die Löseeinrichtung 6 ein Löseelement 6b auf, das mit einer Spanneinheit der Bearbeitungsvorrichtung 3 in Verbindung steht, wobei die Spanneinheit und das Löseelement 6b derart in Verbindung steht, dass eine in das Löseelement 6b eingeleitete Kraft an die Spanneinheit übertragen werden kann, um die Spanneinheit in einen geöffneten Zustand zu bringen.

Wird nun nach dem zentrieren des Bearbeitungsaggregats 3 durch schließen der Zentrierbacken 21a die Betätigungseinrichtung 6a betätigt, d.h., das Druckelement wird auf das Löseelement 6b gedrückt, wird durch die auf das Löseelement 6b eingeleitete Kraft, welche eine Gegenkraft erzeugt, die die beiden Kontaktflächen des Zentrieransatzes 22a und der Zentrierbacken 21a gegeneinander drückt und somit einen Kraftschluss erzeugt, die Vorrichtungseinrichtung 20 in Z-Richtung fixiert, womit auch das Bearbeitungsaggregat in Z-Richtung fixiert wird.

Während dem, dass die Kontaktflächen des Zentrieransatzes 22a und der Zentrierbacken 21a in Kraftschluss gebracht werden, wird über die durch das Druckelement auf das Löseelement 6b ausgeübte Kraft die Spanneinrichtung geöffnet, und ein gegebenenfalls in der Spanneinrichtung gespanntes Werkzeug 4 freigegeben.

## Patentansprüche

1. Bearbeitungskopf (1) für eine Bearbeitungsvorrichtung, insbesondere zum spanenden Bearbeiten von Werkstücken, bevorzugt plattenförmigen Werkstücken, wobei die Werkstücke bevorzugt zumindest teilweise aus Holz, Holzwerkstoffen, Holzersatzwerkstoffen, Kunststoff oder einer Kombination hiervon bestehen, umfassend:
einen Grundkörper (2),
mindestens ein Bearbeitungsaggregat (3), zur Aufnahme eines Werkzeugs (4),
eine Lagerungseinrichtung (5), mittels der das Bearbeitungsaggregat (3) beweglich an dem Grundkörper (2) angebracht ist, und
eine Klemmeinrichtung (20), mittels der das Bearbeitungsaggregat (3) relativ zu dem Grundkörper (2) fixierbar und abstützbar ist,
wobei die Klemmeinrichtung (20) ein erstes Klemmelement (21), das grundkörperseitig vorgesehen ist, und ein zweites Klemmelement (22), das bearbeitungsaggregatseitig vorgesehen ist, aufweist, und die beiden Klemmelemente (21, 22) so eingerichtet sind, dass sie zumindest in einer definierten Stellung des Bearbeitungsaggregates (3) in einen Klemmzustand bringbar sind,
**dadurch gekennzeichnet ist, dass**
die Klemmeinrichtung (20) einen Aufnahmekörper (23) aufweist, in dem das erste Klemmelement (21) in einer Schließrichtung (X, Y) des ersten Klemmelements (21) translatorisch beweglich gelagert ist, wobei der Aufnahmekörper (23) in einer Richtung (Z), die senkrecht zu der Schließrichtung (X, Y) des ersten Klemmelements (21) ist, schwimmend gelagert ist.

2. Bearbeitungskopf (1) nach Anspruch 1, ferner umfassend eine Löseeinrichtung (6), die dazu eingerichtet ist, eine Spanneinheit des Bearbeitungsaggregates (3) derart betätigen zu können, dass diese Öffnet/Schließt, um ein Werkzeug (4) zu spannen oder freizugeben, wobei bevorzugt die Löseeinrichtung (6) die Spanneinheit nur dann betätigen kann, wenn das Bearbeitungsaggregat (3) in der zumindest einen definierten Stellung ist.

3. Bearbeitungskopf (1) nach Anspruch 2, bei dem die Löseeinrichtung (6) umfasst:
eine Betätigungseinrichtung (6a), insbesondere ein Druckelement, das an dem Grundkörper (2) vorgesehen ist, und
ein Löseelement (6b), das mit der Spanneinheit in Verbindung steht, insbesondere kraftübertragend in Verbindung steht,
wobei zum Öffnen der Spanneinheit die Betätigungseinrichtung (6a) eine Kraft auf das Löseelement (6b) auswirkt, welche von dem Löseelement (6b) auf die Spanneinheit derart übertragen wird, dass die Spanneinheit einen geöffneten Zustand einnimmt.

4. Bearbeitungskopf (1) nach einem der vorhergehenden Ansprüche 1 bis 3, bei dem die Lagerungseinrichtung (5) als Drehlager ausgebildet ist, um eine Drehbewegung des Bearbeitungsaggregates (3) um eine Achse (A) zu ermöglichen,
und/oder
die Lagerungseinrichtung (5) als ein Linearlager ausgebildet ist, um eine Linearbewegung des Bearbeitungsaggregates (3) entlang einer Achse zu ermöglichen.

5. Bearbeitungskopf (1) nach einem der vorhergehenden Ansprüche 1 bis 4, bei dem der Aufnahmekörper (23) schwimmend in dem Grundkörper (2) gelagert ist, wobei bevorzugt die Betätigungseinrichtung (6a) der Löseeinrichtung (6) in dem Aufnahmekörper (23) der Klemmeinrichtung (20) integriert ist.

6. Bearbeitungskopf (1) nach einem der Ansprüche 2 bis 5, bei dem für die Klemmeinrichtung (20) und die Löseeinrichtung (6) eine gemeinsame Betätigungseinrichtung oder jeweils eine separate Betätigungseinrichtung vorgesehen ist/sind.

7. Bearbeitungskopf (1) nach einem der vorhergehenden Ansprüche, bei dem die Klemmeinrichtung (20) dazu eingerichtet ist, das Bearbeitungsaggregat (3) in zumindest einer Richtung (X, Y) zu fixieren und zu stützen und/oder die Löseeinrichtung (6), insbesondere im Zusammenwirken mit der Klemmeinrichtung (20), dazu eingerichtet ist, das Bearbeitungsaggregat (3) in einer Richtung (Z) senkrecht zu den beiden anderen Richtungen (X, Y) zu fixieren und zu stützen.

8. Bearbeitungskopf (1) nach einem der vorhergehenden Ansprüche, ferner umfassend
eine Abstützeinrichtung, mittel der das Bearbeitungsaggregat (3) und/oder eine Befestigungseinrichtung (8) an dem Grundkörper (2) abstützbar ist, insbesondere mittelbar oder unmittelbar abstützbar ist, wobei bevorzugt die Abstützeinrichtung nur dann das Bearbeitungsaggregat (3) und/oder die Befestigungseinrichtung (8) abstützt, wenn das Bearbeitungsaggregat (3) in der zumindest einen definierten Stellung ist.

9. Bearbeitungskopf (1) nach Anspruch 8, bei dem die Lagerungseinrichtung (5) mindestens einen translatorischen oder rotatorischen Freiheitsgrad aufweist, und die Abstützeinrichtung so eingerichtet ist, dass sie zumindest in der translatorischen oder rotatorischen Richtung des mindestens einen Freiheitsgrades das Bearbeitungsaggregat (3) und/oder eine Befestigungseinrichtung (8) an dem Grundkörper (2) abstützen kann.

10. Bearbeitungskopf (1) nach einem der vorhergehenden Ansprüche, bei dem die Klemmeinrichtung (20) und/oder die Löseeinrichtung (6) elektrisch, pneumatisch, hydraulisch oder magnetisch angetrieben wird/werden, insbesondere grundkörperseitig angetrieben wird/werden.

11. Bearbeitungskopf (1) nach einem vorhergehenden Ansprüche, beim dem
das zweite Klemmelement (22) in Form eines Zentrierrings (22a) oder Zentrieransatzes ausgebildet ist, der bevorzugt an dem Bearbeitungsaggregat (3) in der Nähe des Grundkörpers (2) ausgebildet ist, und
das erste Klemmelement (21) als zwei Zentrierbacken ausgebildet ist, die insbesondere in etwa komplementär zu dem Zentrierring oder Zentrieransatz sind, und bevorzugt so eingerichtet sind, dass sie den Zentrierring (22) oder den Zentrieransatz in der zumindest einen definierten Stellung des Bearbeitungsaggregates klemmen und/oder umgreifen können.

12. Bearbeitungskopf (1) nach Anspruch 11, bei dem die beiden Zentrierbacken kreisbogenförmig ausgebildet sind, so dass sie den in etwa komplementären Zentrierring oder Zentrieransatz zumindest teilweise umfassen, insbesondere in einem Winkelbereich von mehr als ±20°, weiter bevorzugt in einem Winkelbereich von mehr als ±50°, noch weiter bevorzugt in einem Winkelbereich von mehr als ±90° umfassen oder die Zentrierbacken mit glatten Stirnflächen ausgebildet sind, die senkrecht zur Schließrichtung der Klemmeinrichtung (20) ausgerichtet sind.

13. Bearbeitungskopf (1) nach einem der Ansprüche 3 bis 12, bei dem
die Betätigungseinrichtung (6a) in Form eines Druckstempels ausgebildet ist, der durch einen Kolben in Richtung Bearbeitungsaggregat (3) beaufschlagbar ist, und dadurch auf das Löseelement (6b), gegen eine Gegenkraft, bevorzugt eine Federkraft, eine Betätigungskraft aufbringen kann, wodurch die Spanneinheit in einen geöffneten Zustand bringbar ist.

14. Bearbeitungskopf (1) nach einem der vorhergehenden Ansprüche, bei dem
die zumindest eine definierte Stellung des Bearbeitungsaggregates (3) einer Werkzeugwechselstellung entspricht.

15. Bearbeitungsvorrichtung zum spanenden Bearbeiten von Werkstücken, bevorzugt plattenförmigen Werkstücken, wobei die Werkstücke bevorzugt zumindest teilweise aus Holz, Holzwerkstoffen, Holzersatzwerkstoffen, Kunststoff oder einer Kombination hiervon bestehen, umfassend:
einen Bearbeitungskopf nach einem der vorhergehenden Ansprüche 1 bis 14.

## Claims

1. Machining head (1) for a processing device, in particular for processing workpieces, preferably panel-formed workpieces, the workpieces preferably consisting at least partially of wood, wood-based materials, wood substitute materials, plastic or a combination thereof, comprising:
a base body (2),
at least one processing unit (3) for holding a tool (4),
a bearing device (5) by means of which the processing unit (3) is attached moveably to the base body (2), and
a clamping device (20) by means of which the processing unit (3) is fixable and supportable relative to the base body (2),
wherein the clamping device (20) has a first clamping element (21) provided on the base body side and a second clamping element (22) provided on the processing unit side, and the two clamping elements (21, 22) are configured in such a way that they can be brought into a clamping state, at least in one defined position of the processing unit (3),
**characterised in that**
the clamping device (20) has a holder body (23) in which the first clamping element (21) is mounted so as to be moveable in a translational manner in a closing direction (X, Y) of the first clamping element (21), wherein the holder body (23) is mounted in a floating manner in a direction (Z) perpendicular to the closing direction (X, Y) of the first clamping element (21).

2. Machining head (1) according to claim 1, further comprising a release device (6) which is configured to be able to actuate a clamping unit of the processing unit (3) in such a way that this opens/closes in order to clamp or release a tool (4), wherein preferably the release device (6) can only actuate the clamping unit if the processing unit (3) is in the at least one defined position.

3. Machining head (1) according to claim 2, wherein the release device (6) comprises:
an actuating device (6a), in particular a pressure element, which is provided on the base body (2), and a release element (6b) which is connected to the clamping unit, in particular in a force-transmitting manner,
wherein, in order to open the clamping unit, the actuating device (6a) applies a force to the release element (6b) which is transmitted from the release element (6b) to the clamping unit in such a way that the clamping unit assumes an opened state.

4. Machining head (1) according to one of the preceding claims 1 to 3, wherein the bearing device (5) is designed as a swivel bearing to enable a rotational movement of the processing unit (3) around an axis (A),
and/or
the bearing device (5) is designed as a linear bearing to enable a linear movement of the processing unit (3) along an axis.

5. Machining head (1) according to one of the preceding claims 1 to 4, wherein the holder body (23) is mounted in a floating manner in the base body (2), wherein preferably the actuating device (6a) of the release device (6) is integrated in the holder body (23) of the clamping device (20).

6. Machining head (1) according to one of the claims 2 to 5, wherein a common actuating device or in each case a separate actuating device is provided for the clamping device (20) and the release device (6).

7. Machining head (1) according to one of the preceding claims, wherein the clamping device (20) is configured to fix and support the processing unit (3) in at least one direction (X, Y) and/or the release device (6) is configured, in particular in conjunction with the clamping device (20), to fix and support the processing unit (3) in a direction (Z) perpendicular to the other two directions (X, Y).

8. Machining head (1) according to one of the preceding claims, further comprising a support device by means of which the processing unit (3) and/or a fastening device (8) is supportable on the base body (2), in particular directly or indirectly supportable, wherein preferably the support device only supports the processing unit (3) and/or the fastening device (8) if the processing unit (3) is in the at least one defined position.

9. Machining head (1) according to claim 8, wherein the bearing device (5) has at least one translational or rotational degree of freedom, and the support device is configured in such a way that it can support the processing unit (3) and/or a fastening device (8) on the base body (2) at least in the translational or rotational direction of the at least one degree of freedom.

10. Machining head (1) according to one of the preceding claims, wherein the clamping device (20) and/or the release device (6) is/are driven electrically, pneumatically, hydraulically or magnetically, in particular on the base body side.

11. Machining head (1) according to one of the preceding claims, wherein the second clamping element (22) is designed in the form of a centring ring (22a) or centring hub which is preferably formed on the processing unit (3) near the base body (2), and the first clamping element (21) is designed in the form of two centring jaws which are in particular roughly complementary to the centring ring or centring hub, and are preferably configured in such a way that they can clamp and/or grasp the centring ring (22) or the centring hub in the at least one defined position of the processing unit.

12. Machining head (1) according to claim 11, wherein the two centring jaws form circular arcs, so that they at least partially embrace the roughly complementary centring ring or centring hub, in particular over an angular range of more than ±20°, more preferably over an angular range of more than ±50°, even more preferably over an angular range of more than ±90°, or the centring jaws are formed with smooth frontal surfaces which are aligned perpendicular to the closing direction of the clamping device (20).

13. Machining head (1) according to one of the claims 3 to 12, wherein the actuating device (6a) is designed in the form of a pressure stamp to which pressure is applied by a piston in the direction of the processing unit (3), and as a result can apply an actuating force onto the release element (6b), against a counterforce, preferably a spring force, as a result of which the clamping unit can be brought into an opened state.

14. Machining head (1) according to one of the preceding claims, wherein the at least one defined position of the processing unit (3) corresponds to a tool change position.

15. Processing device for machining workpieces, preferably panel-formed workpieces, the workpieces preferably consisting at least partially of wood, wood-based materials, wood substitute materials, plastic or a combination thereof, comprising:
a machining head according to one of the preceding claims 1 to 14.

## Revendications

1. Tête d'usinage (1) pour un dispositif d'usinage, en particulier pour l'usinage par enlèvement de copeaux de pièces, de préférence de pièces en forme de plaque, dans laquelle les pièces sont constituées de préférence au moins partiellement de bois, de matériaux à bois, de matériaux de substitution du bois, de plastique ou d'une combinaison de ceux-ci, comprenant :
un corps de base (2),
au moins un groupe d'usinage (3) destiné à recevoir un outil (4),
un dispositif de palier (5), au moyen duquel le groupe d'usinage (3) est placé de manière mobile
sur le corps de base (2), et
un dispositif de serrage (20), au moyen duquel le groupe d'usinage (3) peut être fixé et soutenu par rapport au corps de base (2),
dans laquelle le dispositif de serrage (20) présente un premier élément de serrage (21), qui est prévu côté corps de base, et un deuxième élément de serrage (22), qui est prévu côté groupe d'usinage, et les deux éléments de serrage (21, 22) sont configurés de sorte qu'ils peuvent être amenés dans un état de serrage au moins dans une position définie du groupe d'usinage (3),
**caractérisée en ce que**
le dispositif de serrage (20) présente un corps de réception (23) dans lequel le premier élément de serrage (21) est monté de manière mobile en translation dans une direction de fermeture (X, Y) du premier élément de serrage (21), dans laquelle le corps de réception (23) est monté de manière flottante dans une direction (Z) qui est perpendiculaire à la direction de fermeture (X, Y) du premier élément de serrage (21).

2. Tête d'usinage (1) selon la revendication 1, comprenant en outre un dispositif de desserrage (6) qui est configuré pour pouvoir actionner une unité de serrage du groupe d'usinage (3) de sorte que celui-ci s'ouvre/se ferme pour serrer ou libérer un outil (4), dans laquelle de préférence le dispositif de desserrage (6) ne peut actionner l'unité de serrage que lorsque le groupe d'usinage (3) se trouve dans l'au moins une position définie.

3. Tête d'usinage (1) selon la revendication 2, dans laquelle le dispositif de desserrage (6) comprend :
un dispositif d'actionnement (6a), en particulier un élément de pression, qui est prévu sur le corps de base (2), et
un élément de desserrage (6b) qui est en liaison avec l'unité de serrage, en particulier en liaison de transmission de force,
dans laquelle pour ouvrir l'unité de serrage, le dispositif d'actionnement (6a) exerce une force sur l'élément de desserrage (6b), laquelle est transmise par l'élément de desserrage (6b) à l'unité de serrage de sorte que l'unité de serrage prend un état ouvert.

4. Tête d'usinage (1) selon l'une quelconque des revendications précédentes 1 à 3, dans laquelle le dispositif de palier (5) est conçu en tant que palier rotatif pour permettre un mouvement de rotation du groupe d'usinage (3) autour d'un axe (A),
et/ou
le dispositif de palier (5) est conçu en tant que palier linéaire pour permettre un mouvement linéaire du groupe d'usinage (3) le long d'un axe.

5. Tête d'usinage (1) selon l'une quelconque des revendications précédentes 1 à 4, dans laquelle le corps de réception (23) est monté de manière flottante dans le corps de base (2), dans laquelle le dispositif d'actionnement (6a) du dispositif de desserrage (6) est de préférence intégré dans le corps de réception (23) du dispositif de serrage (20).

6. Tête d'usinage (1) selon l'une quelconque des revendications 2 à 5, dans laquelle un dispositif d'actionnement commun ou respectivement un dispositif d'actionnement séparé est/sont prévu(s) pour le dispositif de serrage (20) et le dispositif de desserrage (6).

7. Tête d'usinage (1) selon l'une quelconque des revendications précédentes, dans laquelle le dispositif de serrage (20) est configuré pour fixer et soutenir le groupe d'usinage (3) dans au moins une direction (X, Y) et/ou le dispositif de desserrage (6), en particulier en coopération avec le dispositif de serrage (20), est configuré pour fixer et soutenir le groupe d'usinage (3) dans une direction (Z) perpendiculaire aux deux autres directions (X, Y).

8. Tête d'usinage (1) selon l'une quelconque des revendications précédentes, comprenant en outre
un dispositif de soutien au moyen duquel le groupe d'usinage (3) et/ou un dispositif de fixation (8) peut être soutenu sur le corps de base (2), en particulier peut être soutenu directement ou indirectement, dans laquelle de préférence le dispositif de soutien ne soutient le groupe d'usinage (3) et/ou le dispositif de fixation (8) que lorsque le groupe d'usinage (3) est dans l'au moins une position définie.

9. Tête d'usinage (1) selon la revendication 8, dans laquelle le dispositif de palier (5) présente au moins un degré de liberté en translation ou en rotation, et le dispositif de soutien est configuré de sorte qu'il peut soutenir le groupe d'usinage (3) et/ou un dispositif de fixation (8) sur le corps de base (2) au moins dans la direction en translation ou en rotation de l'au moins un degré de liberté.

10. Tête d'usinage (1) selon l'une quelconque des revendications précédentes, dans laquelle le dispositif de serrage (20) et/ou le dispositif de desserrage (6) est/sont entraîné(s) électriquement, pneumatiquement, hydrauliquement ou magnétiquement, en particulier est/sont entraîné(s) côté corps de base.

11. Tête d'usinage (1) selon l'une quelconque des revendications précédentes, dans laquelle
le deuxième élément de serrage (22) est conçu sous forme d'une bague de centrage (22a) ou d'un jeu de centrage, qui est de préférence conçu sur le groupe d'usinage (3) à proximité du corps de base (2), et
le premier élément de serrage (21) est conçu sous forme de deux mâchoires de centrage, qui sont en particulier à peu près complémentaires de la bague de centrage ou du jeu de centrage, et sont de préférence configurées de sorte qu'elles peuvent serrer et/ou entourer la bague de centrage (22) ou le jeu de centrage dans l'au moins une position définie du groupe d'usinage.

12. Tête d'usinage (1) selon la revendication 11, dans laquelle les deux mâchoires de centrage sont conçues en forme d'arc de cercle, de sorte qu'elles entourent au moins partiellement la bague de centrage ou le jeu de centrage à peu près complémentaire, en particulier dans une plage angulaire de plus de ±20°, plus préférentiellement dans une plage angulaire de plus de ±50°, encore plus préférentiellement dans une plage angulaire de plus de ±90°, ou les mâchoires de centrage sont conçues avec des surfaces frontales lisses qui sont orientées perpendiculairement à la direction de fermeture du dispositif de serrage (20).

13. Tête d'usinage (1) selon l'une quelconque des revendications 3 à 12, dans laquelle
le dispositif d'actionnement (6a) est conçu sous forme d'un piston de pression qui peut être sollicité par un piston en direction du groupe d'usinage (3), et peut ainsi appliquer une force d'actionnement sur l'élément de desserrage (6b), contre une force antagoniste, de préférence une force de ressort, moyennant quoi l'unité de serrage peut être amenée dans un état ouvert.

14. Tête d'usinage (1) selon l'une quelconque des revendications précédentes, dans laquelle
l'au moins une position définie du groupe d'usinage (3) correspond à une position de changement d'outil.

15. Dispositif d'usinage pour l'usinage par enlèvement de copeaux de pièces, de préférence de pièces en forme de plaque, dans laquelle les pièces sont constituées de préférence au moins partiellement de bois, de matériaux à bois, de matériaux de substitution du bois, de plastique ou d'une combinaison de ceux-ci, comprenant :
une tête d'usinage selon l'une quelconque des revendications précédentes 1 à 14.
